# FASCICULE DE BREVET EUROPEEN

(11) **EP 1 094 695 B1**
(45) Date de publication et mention de la délivrance du brevet: **21.06.2006**
(21) Numéro de dépôt: 00410116.8
(22) Date de dépôt: 21.09.2000
(51) Int. Cl.: H05K 7/18, H02B 1/30, H02B 1/01

(54) **Montant pour une ossature métallique, notamment pour un chassis d'une armoire électrique**
Pfosten für ein Metallgerippe, insbesondere für ein Rahmengestell eines Schaltschrankes
Post for metal skeleton, in particular for a frame of an electrical cabinet

(30) Priorité: 18.10.1999 FR 9913160
(43) Date de publication de la demande: 25.04.2001
(73) Titulaire: SCHNEIDER ELECTRIC INDUSTRIES SAS, 92500 Rueil-Malmaison (FR)
(72) Inventeur: Carle, Pierre, Schneider Electric Industries SA, 38050 Grenoble cedex 09 (FR); Laboch, Kazimir, Schneider Electric Industries SA, 38050 Grenoble cedex 09 (FR); Pin, Jean-Pierre, Schneider Electric Industries SA, 38050 Grenoble cedex 09 (FR); Rebesco, Joseph, Schneider Electric Industries SA, 38050 Grenoble cedex 09 (FR)
(74) Mandataire: Broydé, Marc

(56) Documents cités:
- EP-A- 0 751 595
- EP-A- 0 793 320
- EP-A- 0 872 930

## Description

### Domaine technique de l'invention

L'invention est relative à un montant destiné à servir de pilier pour un châssis métallique, notamment d'une armoire électrique, comportant un profilé creux en tôle d'acier de section quadrangulaire dont les quatre faces parallèles deux à deux sont munies de trous et/ou orifices échelonnés à intervalles réguliers dans la direction longitudinale selon un pas déterminé.

### Etat de la technique

Il est connu d'utiliser un châssis d'armoire électrique dans lequel les longerons sont montés sur les montants par un système de fixation à coin hyperstatique. Chaque montant présente une section sensiblement carrée, dont les différentes faces sont percées par des orifices. La fixation des charnières ou autres pièces d'équipement s'effectue par vissage ou rivetage sur une surface plane antérieure du montant.

### Objet de l'invention

L'objet de l'invention consiste à réaliser un montant perfectionné destiné à améliorer la rigidité mécanique de l'ossature métallique, et à faciliter le montage de pièces d'équipement.

Le montant selon l'invention est caractérisé en ce que la première face est conformée en cuvette en forme de V ayant un fond plat dans la partie centrale, et deux bords convergents délimitant deux protubérances avec les premières ailes respectives de la deuxième face et de la quatrième face, et que et la troisième face à l'opposé de la première face comporte des moyens de fixation par agrafage des deux extrémités de la tôle après pliage.

Selon un mode de réalisation préférentiel, la deuxième face et la quatrième face comportent chacune une deuxième aile plane s'étendant en retrait et parallèlement à la première aile en étant raccordée à cette dernière par un décrochement. Les deux protubérances forment à l'intérieur du profilé des coins dont les dièdres font un angle de l'ordre de 45°. La deuxième face et la quatrième face sont symétriques par rapport au plan médian perpendiculaire à la première et à la troisième faces.

Selon une caractéristique de l'invention, les trous et orifices respectifs de la première face, des deuxièmes ailes, et de la troisième face comportent tous le même pas d'échelonnement le long de la direction longitudinale.

Selon une autre caractéristique de l'invention, la cuvette de la première face sert de logement à une pièce d'équipement, notamment une charnière, ou un organe d'arrêt.

L'une des protubérances sert avantageusement d'élément d'appui en forme de couteau à un joint d'étanchéité. Les orifices de la troisième face sont de formes rectangulaires pour l'encliquetage ou l'accrochage d'une platine ou d'un écran.

La section du profilé permet l'emmanchement d'un bipode de jonction comportant des extensions prenant appui dans les coins, et se trouvant d'autre part en butée contre les décrochements. Un tel agencement améliore la tenue mécanique dans la zone de raccordement du montant avec une traverse.

### Description sommaire des dessins

D'autres avantages et caractéristiques ressortiront plus clairement de la description qui va suivre d'un mode de réalisation de l'invention, donné à titre d'exemple non limitatif et représenté aux dessins annexés dans lesquels :
- la figure 1 est une vue en perspective du montant selon l'invention ;
- la figure 2 montre une vue en coupe transversale du montant selon la ligne 2-2 de la figure 3 ;
- la figure 3 représente une vue agrandie de l'extrémité du montant selon la figure 1 ;
- les figures 4 à 7 montrent des vues en élévation des quatre faces du profilé ;
- la figure 8 illustre les différentes fonctionnalités du montant vu en plan ;
- la figure 9 est une vue éclatée en perspective du montant et d'une charnière ;
- la figure 10 montre une vue en coupe du montant avec emmanchement d'un bipode de jonction ;
- la figure 11 est une vue partielle de l'ossature avec montage d'une entretoise sur deux montants disposés en tête-bêche.

### Description d'un mode de réalisation préférentiel

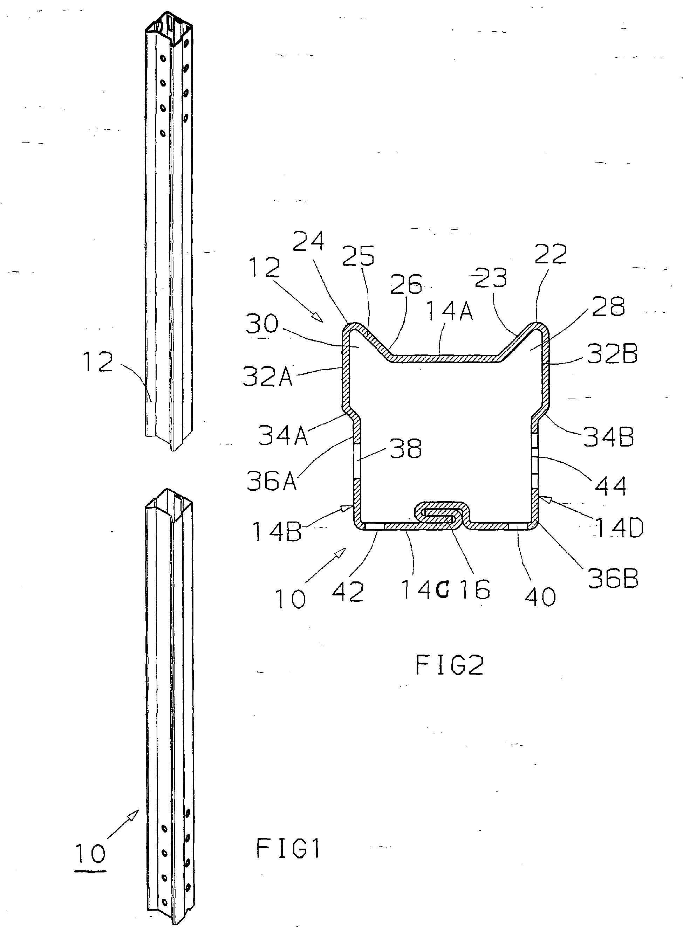

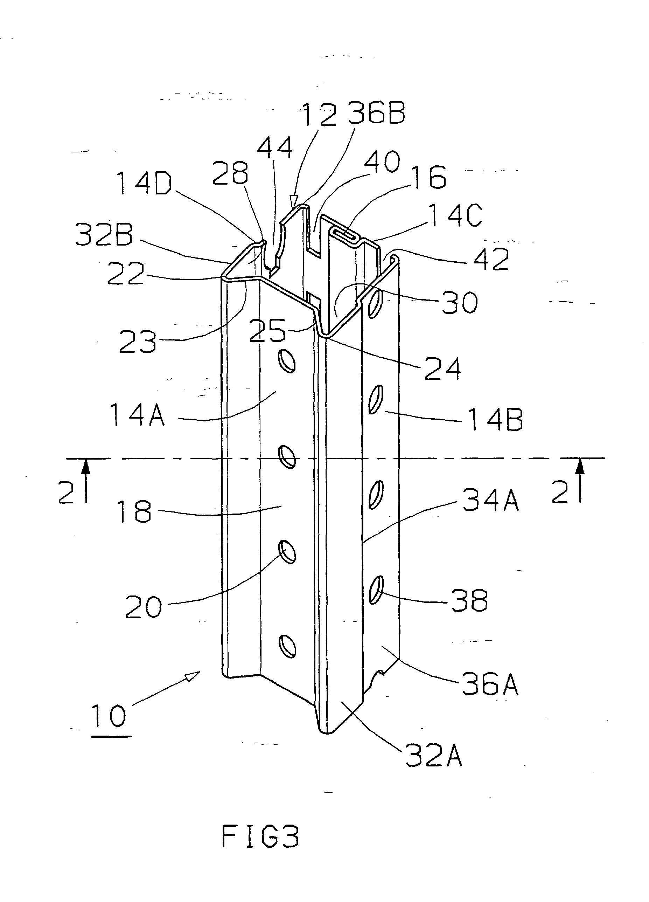

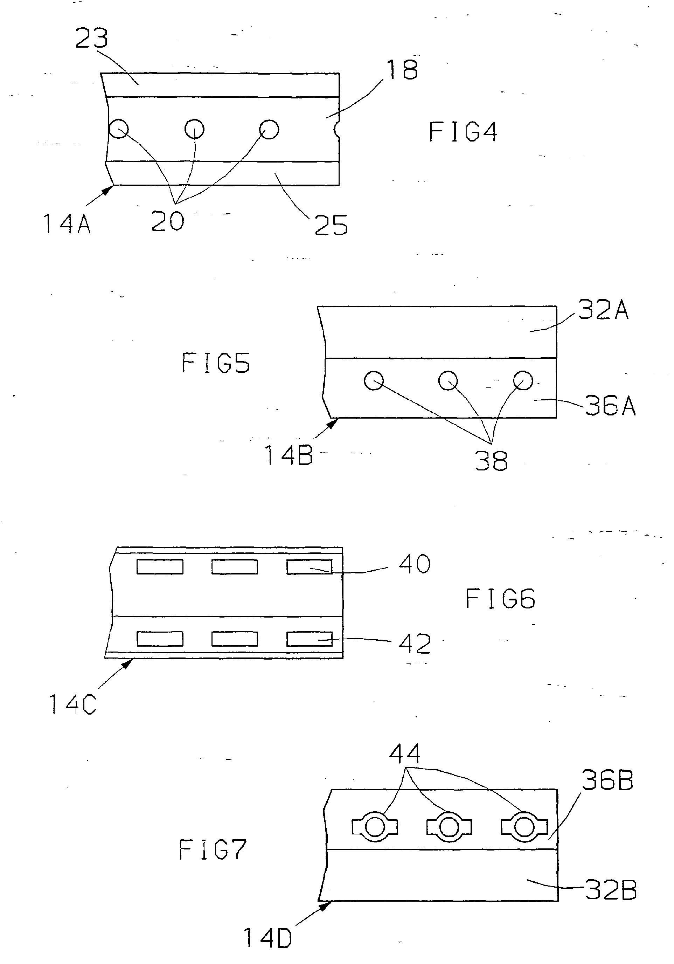

En référence aux figures 1 à 7, un montant 10 destiné à servir de pilier pour un châssis métallique d'une armoire électrique, comporte un profilé 12 creux en tôle d'acier, et présente une section quadrangulaire. La tôle découpée est pliée dans la direction longitudinale pour former les quatre faces 14A, 14B, 14C, 14D parallèles deux à deux. L'assemblage des deux extrémités opposées de la tôle s'effectue par agrafage sur toute la longueur du profilé par des moyens de fixation 16 situés à l'intérieur de la face 14C.

La première face 14A comporte une partie centrale 18 plane dotée d'une pluralité de trous 20 circulaires échelonnés à intervalles réguliers le long de la direction longitudinale. Le pas de séparation des trous 20 est de l'ordre de 25mm. De part et d'autre de la surface centrale 18 se trouvent deux protubérances 22, 24 ayant des bords 23, 25 convergents constituant une cuvette 26. A l'intérieur du profilé, les deux protubérances 22, 24 forment des coins 28, 30 en formes de dièdres faisant un angle de l'ordre de 45°.

La deuxième face 14B comprend une première aile 32A plane raccordée dans la zone médiane par un décrochement 34A à une deuxième aile 36A parallèle. La première aile 32A est en saillie de la deuxième aile 36A, et délimite la protubérance 24 avec le bord 25 incliné de la face 14A. Une série de trous 38 circulaires est prévue dans la deuxième aile 36A avec un pas d'écartement longitudinal de l'ordre de 25mm.

La troisième face 14C d'agrafage est pourvue d'une surface externe sensiblement plane, et est pourvue de deux séries d'orifices 40, 42 rectangulaires s'étendant parallèlement entre les moyens de fixation 16 avec un pas longitudinal de 25mm.

Le profil de la quatrième face 14D est symétrique de celui de la deuxième face 14B par rapport au plan médian perpendiculaire aux première et troisième faces 14A, 14C. La première aile 32B plane est raccordée par un décrochement 34B à une deuxième aile 36B parallèle. La première aile 32B fait saillie de la deuxième aile 36B, et délimite la protubérance 22 avec le bord 23 incliné de la face 14A. Une série de trous 44 oblongs est prévue dans la deuxième aile 36B avec le même pas d'écartement longitudinal.

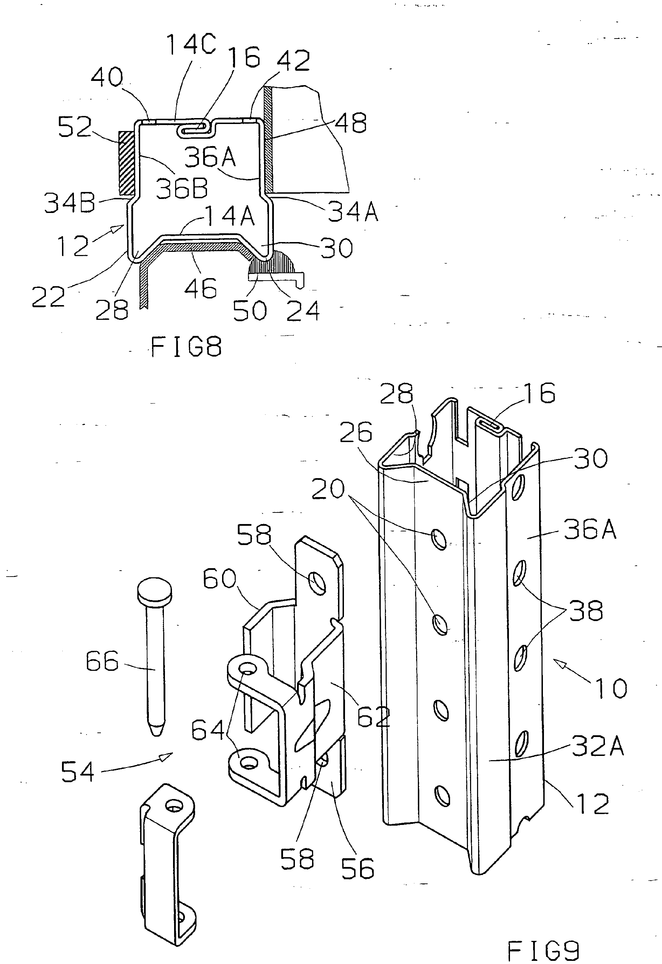

Les différentes fonctionnalités du montant 10 sont illustrées sur les figures 8 à 10.

Sur la figure 8, une pièce d'équipement 46 peut être logée dans la cuvette de la première face 14A en étant bloquée en rotation grâce aux deux bords 23, 25 convergents. La pièce d'équipement 46 peut être une charnière, un organe d'arrêt d'un dispositif de fermeture à tringles, etc... Une entretoise 48 en tôle peut se plaquer sur la deuxième aile 36A de la face 14B, et vient en butée contre le décrochement 34A de manière à être alignée sensiblement avec la première aile 32A. La protubérance 24 sert d'élément d'appui à un joint d'étanchéité 50 en forme de bourrelet rectiligne, prévu par exemple sur le cadre interne de la porte de l'armoire pour obtenir une étanchéité avec un effet de couteau. Les orifices 40, 42 rectangulaires de la troisième face 14C permettent l'encliquetage ou l'accrochage d'une platine ou d'un écran sur la surface externe plane. La quatrième face 14D a une fonction similaire à celle de la deuxième face 14B. Au lieu d'une entretoise, il est possible de rapporter un joint 52 en fonction de l'indice d'étanchéité de l'armoire. Le joint 52 peut avoir une épaisseur supérieure à celle du décrochement 34B de manière à autoriser un effet d'écrasement lors de l'accolement d'une tôle ou autre objet.

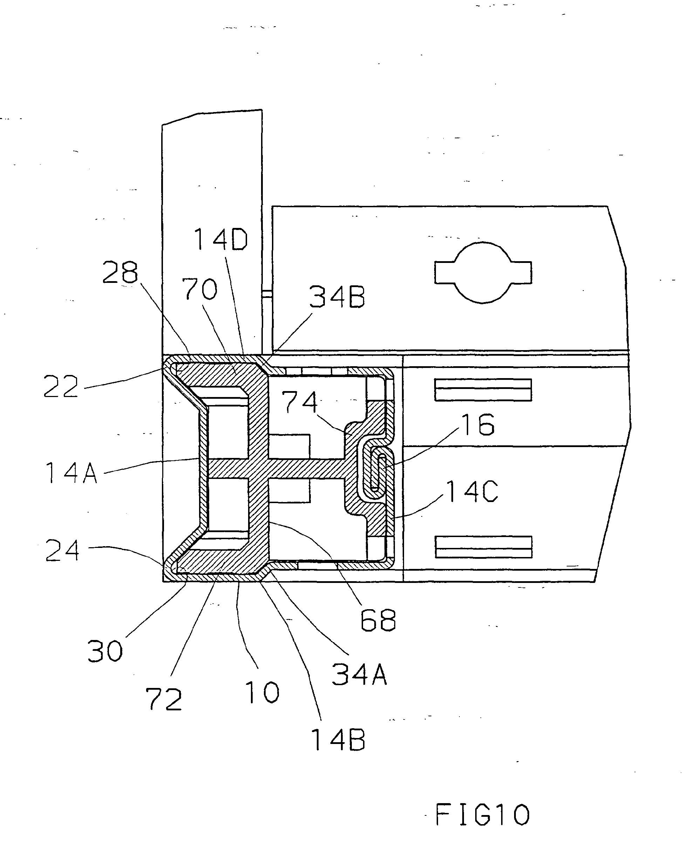

Sur la figure 9, un exemple de pièce d'équipement 46 représente une charnière 54 ayant une embase 56 munie de deux trous 58 séparés longitudinalement au pas ou à un multiple du pas des trous 20. L'embase 56 est raccordée à deux branches 60, 62 latérales ayant une forme conjuguée à celle des deux bords 23, 25 en V de la cuvette. L'une des branches 62 porte les paliers 64 de l'axe 66 d'articulation de la charnière 54. Pour la fixation de la charnière sur le montant 10, il suffit d'aligner les trous 58 de l'embase 56 avec deux trous 20 de la première face 14A, et de passer des rivets ou tout autre moyen d'assemblage. Le serrage des deux branches 60, 62 latérales dans la cuvette permet d'obtenir un calage efficace de la charnière 54 sur le montant 10.

La figure 10 montre une jambe d'un bipode de jonction 68 emmanchée longitudinalement dans le profilé du montant 10. Le bipode de jonction 68 comporte deux extensions 70, 72 prenant appui dans les coins 28, 30, et se trouvant d'autre part en butée contre les décrochements 34A, 34B. Le bipode de jonction 68 possède en plus un organe de positionnement 74 venant en engagement avec la paroi interne de la troisième face 14C. Le bipode 68 est ainsi calé sans jeu à l'intérieur du montant 10.

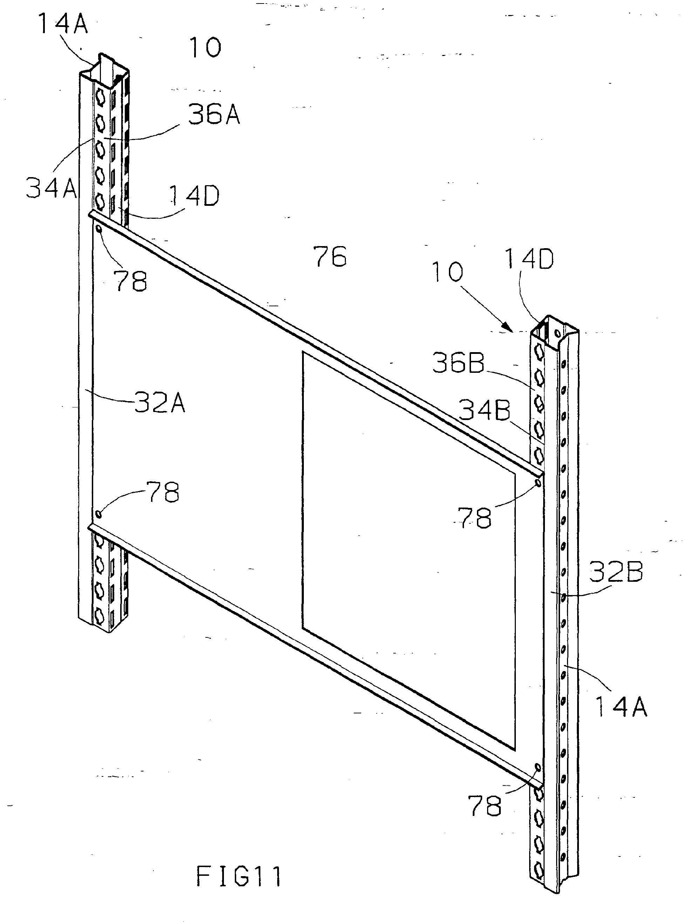

La figure 11 montre un exemple d'installation d'une entretoise 76 sur deux montants 10 selon l'invention. L'entretoise 76 est formée par une tôle rectangulaire munie d'orifices 78 aux quatre coins. Les quatrièmes faces 14D des deux montants 10 sont disposés en regard l'une de l'autre, tandis que les premières faces 14A sont orientées en sens opposé vers l'extérieur. Il suffit d'intercaler l'entretoise 76 entre les décrochements 34A, 34B, et de la plaquer contre les ailes 36A, 36B des deux montants 10 au moyen de vis (non représentées). La tranche de la tôle de l'entretoise 76 est ainsi masquée par les ailes 32A et 32B se trouvant en saillie par rapport aux ailes 36A, 36B respectives.

## Revendications

1. Montant destiné à servir de pilier pour un châssis métallique, notamment d'une armoire électrique, comportant un profilé (12) creux en tôle d'acier de section quadrangulaire dont les quatre faces (14A, 14B, 14C, 14D) parallèles deux à deux sont munies de trous et/ou orifices (20, 38, 40, 42, 44) échelonnés à intervalles réguliers dans la direction longitudinale selon un pas déterminé,
**caractérisé en ce que**
- la première face (14A) est conformée en cuvette en forme de V ayant un fond plat dans la partie centrale (18), et deux bords (23, 25) convergents délimitant deux protubérances (22, 24) avec les premières ailes (32A, 32B) respectives de la deuxième face (14B) et de la quatrième face (14D),
- et la troisième face (14C) à l'opposé de la première face (14A) comporte des moyens de fixation par agrafage des deux extrémités de la tôle après pliage.

2. Montant selon la revendication 1, **caractérisé en ce que** la deuxième face (14B) et la quatrième face (14D) comportent chacune une deuxième aile (36A, 36B) plane s'étendant en retrait et parallèlement à la première aile (32A, 32B) en étant raccordée à cette dernière par un décrochement (34A, 34B).

3. Montant selon la revendication 1 ou 2, **caractérisé en ce que** les deux protubérances (22, 24) forment à l'intérieur du profilé des coins (28, 30) dont les dièdres font un angle de l'ordre de 45°.

4. Montant selon la revendication 2 ou 3, **caractérisé en ce que** la deuxième face (14B) et la quatrième face (14D) sont symétriques par rapport au plan médian perpendiculaire à la première et à la troisième faces (14A, 14C).

5. Montant selon l'une des revendications 1 à 4, **caractérisé en ce que** les trous (20, 38, 44) et orifices (40, 42) respectifs de la première face (14A), des deuxièmes ailes (36A, 36B), et de la troisième face (14C) comportent tous le même pas d'échelonnement le long de la direction longitudinale.

6. Montant selon la revendication 1, **caractérisé en ce que** la cuvette de la première face (14A) sert de logement à une pièce d'équipement (46), notamment une charnière (54) ou un organe d'arrêt.

7. Montant selon la revendication 1, **caractérisé en ce que** l'une des protubérances (22, 24) sert d'élément d'appui en forme de couteau à un joint d'étanchéité.

8. Montant selon l'une des revendications 1 à 7, **caractérisé en ce que** les orifices (40, 42) de la troisième face (14C) sont rectangulaires pour l'encliquetage ou l'accrochage d'une platine ou d'un écran.

9. Montant selon l'une des revendications 3 à 8, **caractérisé en ce que** la section du profilé permet l'emmanchement d'une jambe de bipode de jonction(68), comportant des extensions (70, 72) prenant appui dans les coins (28, 30), et se trouvant d'autre part en butée contre les décrochements (34A, 34B).

## Claims

1. Upright designed to act as a pillar for a metal frame, in particular of an electrical cabinet, comprising a hollow profiled section (12) made of steel plate of quadrangular cross-section the four faces (14A, 14B, 14C, 14D) whereof, parallel two by two, are provided with holes and/or orifices (20, 38, 40, 42, 44) staggered at regular intervals in the longitudinal direction with a set pitch,
**characterized in that**
- the first face (14A) is shaped as a V-shaped dish having a flat bottom in the central part (18) and two convergent edges (23, 25) delineating two protuberances (22, 24) with the respective first wings (32A, 32B) of the second face (14B) and of the fourth face (14D),
- and the third face (14C) opposite the first face (14A) comprises means for fixing by clasping the two ends of the metal plate after folding.

2. Upright according to claim 1, **characterized in that** the second face (14B) and the fourth face (14D) both comprise a flat second wing (36A, 36B) extending withdrawn from and parallel to the first wing (32A, 32B) and joined to the latter by a recessed section (34A, 34B).

3. Upright according to claim 1 or 2, **characterized in that** the two protuberances (22, 24) form inside the profiled section corners (28, 30) the dihedra whereof make an angle of about 45°.

4. Upright according to claim 2 or 3, **characterized in that** the second face (14B) and the fourth face (14D) are symmetrical with respect to the mid-plane perpendicular to the first and third faces (14A, 14C).

5. Upright according to one of the claims 1 to 4, **characterized in that** the respective holes (20, 38, 44) and orifices (40, 42) of the first face (14A), of the second wings (36A, 36B), and of the third face (14C) all comprise the same separating pitch along the longitudinal direction.

6. Upright according to claim 1, **characterized in that** the dish of the first face (14A) acts as housing for a piece of equipment (46), in particular a hinge (54) or a stopping means.

7. Upright according to claim 1, **characterized in that** one of the protuberances (22, 24) acts as support element in the form of a knife-blade for a seal.

8. Upright according to one of the claims 1 to 7, **characterized in that** the orifices (40, 42) of the third face (14C) are rectangular for clipping or latching of a mounting plate or a shield.

9. Upright according to one of the claims 3 to 8, **characterized in that** the cross-section of the profiled section enables a leg of a joining bipod (68) to be fitted comprising extensions (70, 72) pressing into the corners, (28, 30) and in addition pressing against the stopping surfaces formed by the recessed sections (34A, 34B).

## Patentansprüche

1. Längsträger, der dazu dient, als Eckstütze eines Metallgerüstes, insbesondere eines Schaltschranks verwendet zu werden, und ein Stahl-Hohlprofil mit Rechteckquerschnitt umfasst, in dessen vier, paarweise parallel zueinander verlaufenden Seiten (14A, 14B, 14C, 14D) in Längsrichtung Löcher und/oder Öffnungen (20, 38, 40, 42, 44) in regelmäßigen Abständen angeordnet sind,
**dadurch gekennzeichnet, dass**
- die erste Seite (14A) als V-förmige Rinne mit einem flachen Boden im Mittelabschnitt (18) sowie zwei schräg verlaufenden Rändern (23, 25) ausgebildet ist, die zusammen mit den ersten Flächen (32A, 32B) der zweiten Seite (14B) bzw. der vierten Seite (14D) zwei Vorsprünge (22, 24) bilden,
- und dass die der ersten Seite (14A) gegenüber liegende dritte Seite (14C) Befestigungsmittel zur Falzverbindung der beiden Ränder des Blechs nach dem Umkanten umfasst.

2. Längsträger nach Anspruch 1, **dadurch gekennzeichnet, dass** die zweite Seite (14B) und die vierte Seite (14D) jeweils eine zweite ebene Fläche (36A, 36B) umfassen, der zurückversetzt und parallel zur ersten Fläche (32A, 32B) verläuft und über einen Absatz (34A, 34B) mit dieser ersten Fläche verbunden ist.

3. Längsträger nach Anspruch 1 oder 2, **dadurch gekennzeichnet, dass** die beiden Vorsprünge (22, 24) auf der Innenseite des Profils V-förmige Ecken (28, 30) mit einem Flächenwinkel von etwa 45° bilden.

4. Längsträger nach Anspruch 2 oder 3, **dadurch gekennzeichnet, dass** die zweite Seite (14B) und die vierte Seite (14D) symmetrisch zu der senkrecht auf der ersten bzw. dritten Seite (14A, 14C) stehenden Mittelebene angeordnet sind.

5. Längsträger nach einem der Ansprüche 1 bis 4, **dadurch gekennzeichnet, dass** die in der ersten Seite (14A), in den zweiten Flächen (36A, 36B) sowie in der dritten Seite (14C) ausgebildeten Löcher (20, 38, 42) alle im gleichen Relativabstand in Längsrichtung angeordnet sind.

6. Längsträger nach Anspruch 1, **dadurch gekennzeichnet, dass** die Rinne der ersten Seite (14A) als Aufnahme für ein Montageteil (46), insbesondere ein Scharnier (54) oder ein Feststellelement dient.

7. Längsträger nach Anspruch 1, **dadurch gekennzeichnet, dass** einer der Vorsprünge (22, 24) vorteilhaft als keilförmige Anlage für eine Dichtung dient.

8. Längsträger nach einem der Ansprüche 1 bis 7, **dadurch gekennzeichnet, dass** die Öffnungen (40, 42) der dritten Seite (14C) rechteckig geformt sind, um eine Platte oder eine Trennwand durch Aufschnappen oder Verrasten aufnehmen zu können.

9. Längsträger nach einem der Ansprüche 3 bis 8, **dadurch gekennzeichnet, dass** der Querschnitt des Profils das Einstecken eines Verbindungseisens (68) mit sich in den Ecken (28, 30) abstützenden und auf der anderen Seite an den Absätzen (34A, 34B) anliegenden Armen erlaubt.
